(19)

Europäisches Patentamt
European Patent Office
Office européen des brevets

(11) **EP 3 270 000 A2**

(12) **EUROPEAN PATENT APPLICATION**

(43) Date of publication:
**17.01.2018 Bulletin 2018/03**

(51) Int Cl.:
**F16H 1/28** (2006.01) **H02K 7/116** (2006.01)

(21) Application number: **17181073.2**

(22) Date of filing: **12.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.07.2016 IT 201600072537**

(71) Applicant: **Phase Motion Control S.p.A.**
**16141 Genova (IT)**

(72) Inventor: **VENTURINI, Marco**
**16141 Genova (IT)**

(74) Representative: **Cataldi, Giulia et al**
**Studio Torta S.p.A.**
**Via Viotti, 9**
**10121 Torino (IT)**

(54) **GEARMOTOR**

(57)      A gearmotor (1; 101) with a fixed gear (7; 107), a movable gear (19; 119) and a planet carrier (8); the fixed gear (7; 107), the movable gear (19; 119) and the planet carriers (8) being coaxial relative to a first axis (L1); wherein the gearmotor (1; 101) has one or more planet gears (12; 112) connected to said planet carrier (8); each planet gear (12; 112) having a second axis (L2), each planet gear (12; 112) being connected to the planet carrier (8) so as to rotate around said second axis (L2); said first and second axes (L1, L2) being substantially parallel to one another; each planet gear (12; 112) having a driving gear (13) and a driven gear (14), wherein the driving gear (13) meshes with the fixed gear (7; 107) and the driven gear (14) meshes with the movable gear (19; 119); the gearmotor (1; 101) having a motor (2) which is directly connected to the planet carrier (8) so as to cause, in use, said planer carrier (8) to rotate around the first axis (L1).

FIG.2

## Description

The present patent application relates to a gearmotor, e.g. for application on robotic machines such as the actuation of mechanical arms in the lightweight robotics field, or for exoskeletons or aeronautical actuations.

In particular, the present invention relates to a gearmotor for an articulated structure, such as, for example exoskeleton joints or for robotized arms. This type of articulated structure has a limited angular movement and, at the same time, a high load in terms of twisting and bending moment. Therefore, said articulated structures require large rolling or sliding bearings.

In particular, the present invention relates to a gearmotor for actuations wherein a high torque is required, of a few hundred Nm, combined with particularly small masses and dimensions, for example with members no larger than 100-120 mm.

For this type of application it is known to resort to assemblies that combine a servomotor (typically with permanent magnets) and a reduction gear, generally of the epicyclic or Harmonic Drive type.

However, epicyclic reduction gears of a known type, are quite complex and have at least two reduction stages in order to obtain the required torque. Therefore, known epicyclic reduction gears require a large number of components to achieve the two reduction stages, and are therefore particularly complex, bulky, expensive and heavy for applications in lightweight robotics.

On the other hand, the Harmonic Drive reduction gears have the disadvantage of having limited rigidity, low performance, high noise and significant axial dimensions.

The object of the present invention is to provide a gearmotor which overcomes the above-mentioned problems.

In particular, the object of the present invention is to provide a gearmotor capable of transmitting the necessary torque while ensuring an accurate transfer of the angular position, minimum encumbrance, lightness, stiffness to the external loads. The object of the present invention is to provide a gearmotor with extremely limited axial dimensions.

The object of the present invention is to provide a gearmotor that allows the incorporation inside an articulated structure in a compact manner.

According to the present invention a gearmotor as set forth in the appended claims is provided.

The invention will now be described with reference to the accompanying drawings, which illustrate examples of non-limiting embodiments, wherein:

Figure 1 is a schematisation of the structure of the gearmotor according to the present invention;
Figure 2 is a side view of the gearmotor according to the present invention;
Figure 3 is a section, according to the lines III-III, of the gearmotor according to the present invention;
Figure 4 is similar to Figure 3 and illustrates, in section, an alternative of the gearmotor according to the present invention.

In Figures from 1 to 3, 1 denotes, as a whole, a gearmotor having only one output side O. In particular, the gearmotor has an internal drive system 2 so there is no connection to an external motor.

With the indication output side O it is meant the side that is configured to couple with a component (not illustrated), for example, a mechanical arm, to which to transmit motion.

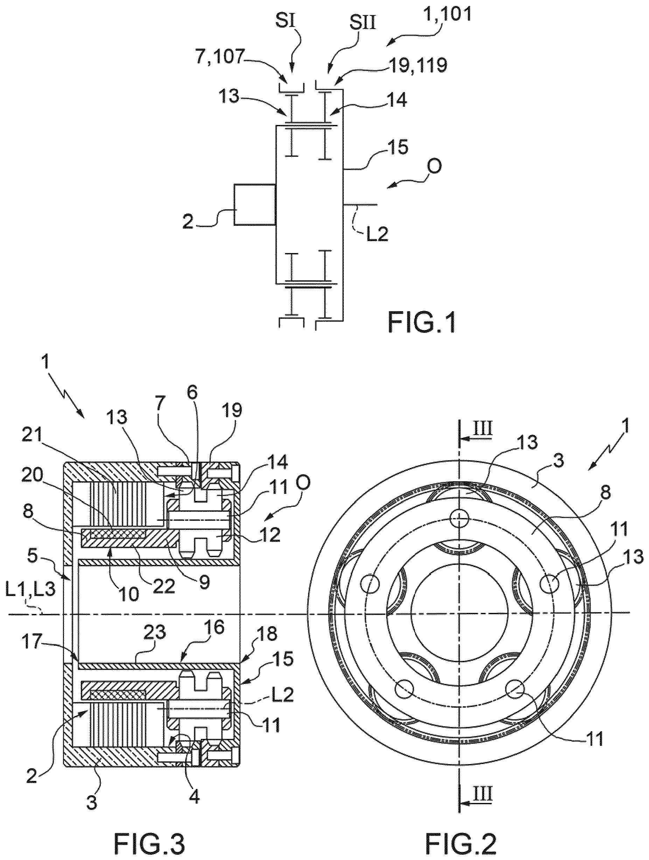

As illustrated in Figures 2 and 3, the gearmotor 1 comprises a cylindrical external casing 3, which has a through internal cavity 4 and a longitudinal axis L1. The cavity 4 faces the outside of the casing 3 through the end openings 5 and 6 at the longitudinal ends of the casing 3. The cavity 4 is arranged to house a lubricant sealing system, so as to seal and protect the gearmotor 1 from external contamination.

In particular, the casing 3 comprises a fixed gear 7, which is coupled to the casing 3 itself in an angularly and axially fixed manner.

The fixed gear 7 radially protrudes inside the cavity 4. The fixed gear 7 is substantially perpendicular to the axis L1. As illustrated in Figure 3, the fixed gear 7 is a body separate from the casing. In the example illustrated in Figure 3, the fixed gear 7 is connected to the casing 3 by means of releasable fixing elements, for example by means of screws. The fixed gear 7 is internally toothed.

The gearmotor 1 comprises, furthermore, a planet carrier 8 mounted inside the casing 3 for example simultaneously when mounting the fixed gear 7. The planet carrier 8 is coaxial to the axis L1 and is mounted so as to rotate around the axis L1.

In particular, the planet carrier 8 comprises a tubular body 9 having a circular central cavity 10. Advantageously, the cavity 10 can house, as will be better illustrated below, depending on the need: a lubricant sealing system, so as to seal and protect the gearmotor 1 from external contamination; and/or precision bearings to improve the accuracy of rotation of the output axis; and/or an encoder; and/or a brake; and/or ensure the passage of electric or hydraulic or pneumatic systems (or any combination of said systems).

The planet carrier 8 comprises, furthermore, a plurality of pins 11, each having an axis L2 substantially parallel to the axis L1. The pins 11 are uniformly distributed around the axis L1. Advantageously, there are at least three pins 11. In the example illustrated in Figures 3 and 2, there are five pins 11. According to an alternative not illustrated, the number of pins 11 is different and is a function of the type of application of the gearmotor 1.

The gearmotor 1 comprises, furthermore, a plurality of planet gears 12 each of which is fitted on a respective pin 11. Each planet gear 12 is coaxial to the axis L2 of the respective pin 11 and is mounted so as to rotate around the axis L2 of the respective pin 11. Of course, the number of planet gears 12 corresponds to the number of pins 11. As will be better illustrated in the following, each planet gear 12 comprises two gears, hereafter identified with the terms driving gear 13 and driven gear 14.

Advantageously, the presence of at least three planet gears 12 allows to obtain a rotational constraint for the planet carrier 8. Therefore, no bearings or bars are needed for the support of the planet carrier 8, since the planet carrier 8 itself is already constrained by three or more rolling contact points.

The gearmotor 1 comprises, furthermore, an output block 15 configured to transmit the motion to a respective arm (not illustrated) of a robotic machine. The output block 15 has a substantially cylindrical body and an internal cavity 16 which faces the outside through the end openings 17 and 18. The opening 17 is directed towards the casing 3 and the opening 18 is directed towards the output side O respectively. The output block 15 is coaxial to the axis L1 and is mounted so as to rotate around the axis L1.

Advantageously, the opening 17 faces the end opening 5 of the casing and the cavity 16 is in communication with the outside through both the opening 17 and the end opening 5. As will be better shown in the following, in this way it is possible to insert, in use, external means inside and/or through the cavity 16.

The output block 15, in turn, comprises a movable gear 19 which is coupled to the output block 15 in an angularly and axially fixed manner. The movable gear 19 radially protrudes inside the cavity 4. The movable gear 19 is substantially perpendicular to the axis L1.

According to the example illustrated in Figure 3, the movable gear 19 is coupled to the output block 15, for example by means of connecting elements such as screws. The movable gear 19 is rotatable around the axis L1 along with the output block 15. The movable gear 19 is internally toothed.

The output block 15 is aligned next to the casing 3 and is connected to the casing 3 itself by means of the planet gears 12.

In particular, each planet gear 12 meshes with the fixed gear 7 by means of the driving gear 13, and with the movable gear 19 by means of the driven gear 14. In other words, each planet gear 12 axially constrains the output block 15 to the casing 3.

Advantageously, the driving gear 13 and the driven gear 14 of each planet gear 12 have a truncated cone contour so as to ensure accurate axial positioning between the components.

Advantageously, in the gearmotor 1, the rotor member is integrated in the planet carrier 8. Advantageously, the drive system 2 is a permanent magnet brushless motor, which in turn comprises: permanent magnets 20 and a stator 21. In particular, the permanent magnets 20 are integral to the planet carrier 8, while the stator 21 is integral to the casing 3. The brushless motor 2 is of a known type and is illustrated in a schematic manner.

According to the example illustrated in Figure 2, the planet carrier 12 comprises a support portion 22 on which the magnets 20 of the brushless motor 2 are fixed.

As illustrated in Figure 2, the support portion 22 is a tubular portion which axially protrudes with respect to the planet gears 12, i.e. the brushless motor 2 is arranged aside and along the longitudinal axis L1 of the planet gears 12.

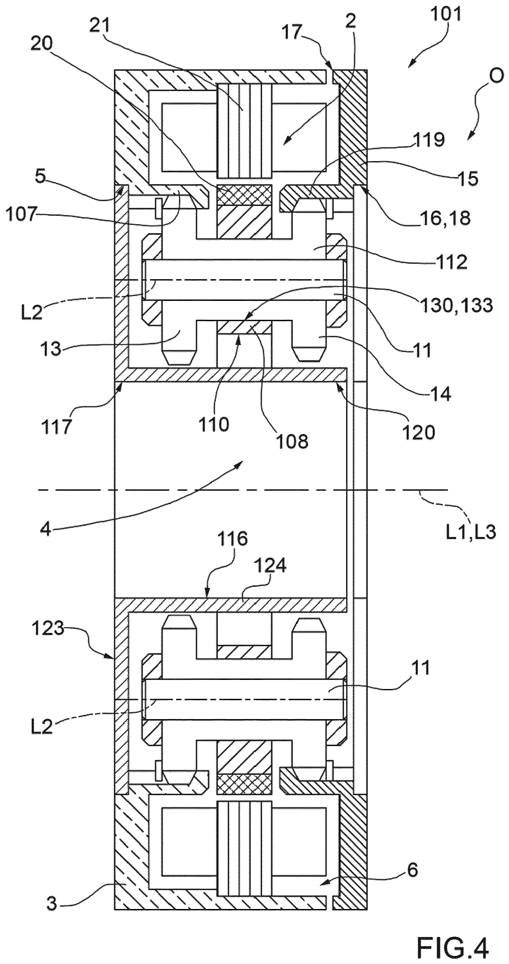

In Figure 4, 101 denotes an alternative of the gearmotor 1. It can be noted that in Figure 4 the components in common with the gearmotor 1 retain the same numbering and are considered comprised in the gearmotor 101 itself, without repeating them for brevity.

Advantageously, the output block 15 has an output axis L3, which coincides with the longitudinal axis L1. According to the example illustrated in Figure 2, the output block 15 comprises an output shaft 23 coaxial to the longitudinal axis L1 of the casing 3. In particular, the output shaft 23 is an internally hollow shaft an is arranged inside the cavity 4 of the casing 3; in this way, the structure of the gearmotor 1 is extremely compact and rigid.

The output shaft 23 is mounted so as to rotate around the longitudinal axis L1 and radially inside the planet carrier 8. The output shaft 23 is coaxial to the planet carrier 8 and is inserted inside the cavity 10 of the planet carrier 8 itself. Preferably, the output shaft 23 is mounted with clearance inside the planet carrier 8.

In particular, the output shaft 23 is coaxial to the tubular body 9 and is inserted inside the cavity 10 so as to rotate in a free manner. In particular, the output shaft 23 is spaced from the tubular body 9 so as to not develop friction or interference with the tubular body 9 during use.

This particular arrangement of the output shaft 23 radially inside the planet carrier allows, advantageously, to make the gearmotor 1 more compact and rigid.

Advantageously, the output shaft 23 has a cavity 16 for housing external members, for example bearings or joining members. Advantageously, the cavity 16 is a through cavity and faces outside of the gearmotor 1 both through the opening 17 and through the end opening 5. Advantageously, the opening 17 and the end opening 5 have a section having a dimension such to allow the insertion of external elements such as: electric cables, pneumatic or hydraulic ducts, bearings, sealing members, mechanical components.

Advantageously, the cavity 16 can house, according to the need: a lubricant sealing system so as to seal and protect the gearmotor 1 from external contamination; and/or precision bearings for improving the rotation accuracy of the output shaft 23; and/or an encoder; and/or a brake; and/or guarantee the passage of electric or hydraulic or pneumatic systems. Advantageously, the end opening 5, the opening 17, the cavity 1\6 and the opening 18 allow the insertion and/or the housing of any combination of said systems as listed above.

In Figure 4, 101 denotes an alternative of the gearmotor. In Figure 4, the components in common with the gearmotor 1 retain the same numbering and are considered comprised therein, without mentioning them again for brevity.

In particular, according to the alternative illustrated in Figure 4, the gearmotor 101 comprises a fixed gear 107 made in one piece with the casing 3 so as to form a single body. Therefore, the stiffness of the gearmotor 101 is increased and the time and the costs for mounting the gearmotor 1 are reduced.

Similarly, the gearmotor 101 comprises a movable gear 119 made in one piece with the output block 15 so as to form a single body. Therefore, the stiffness of the gearmotor 1 is increased and the time and the costs for mounting the gearmotor 1 are reduced.

According to the alternative illustrated in Figure 4, the gearmotor 101 comprises a planet carrier 108 which has the shape of a disc having a cavity 110 central and substantially coaxial to the longitudinal axis L1.

Advantageously, the gearmotor 101 comprises planet gears 112 having a hooking portion 130 interposed between the driving gear 13 and the driven gear 14. In particular, the coupling portion 130 is a tubular body portion of the planet gear 112 having an extension along the longitudinal axis L2 which allows a portion of the planet carrier 108 to be housed. In particular, the planet carrier 108 has a plurality of seats 133 in each of which a respective planet gear 112 is mounted, so it can rotate around its longitudinal axis L2. Advantageously, the planet carrier 108 integrates on the external circumference, between the driving gear 13 and the driven gear 14 of the planet gears 112, the magnets 20 which make the rotor of the motor 2.

Advantageously, the gearmotor 101 comprises three or more planet gears 112 uniformly distributed around the axis L1.

Advantageously, the driving gear 13 of each planet gear 12, 112 meshes with the fixed gear 7, 107 so as to form a first stage meshing torque SI. Advantageously, the driven gear 14 of each of the planet gears 12,112 meshes with the movable gear 19, 119 so as to form a second stage meshing torque SII. Advantageously, the planet carrier 8 is held in position inside the casing 3 by means of the planet gears 12, 112. In other words, the presence of at least three planet gears 12, 112 allows to constrain the planet carrier 8 inside the casing 3 without the use of shafts or bearings. In this way the weight and number of components of the gearmotor 1, 101 is greatly reduced.

Similarly, the presence of at least three planet gears 12, 112 allows to constrain the movable gear 19, 119 relative to the fixed gear 7, 107 without the use of shafts or bearings. In other words, the movable gear 19, 119 and consequently the output block 15 are kept in position due to the meshing between the planet gears 12, 112 and the fixed gear. In this way the weight and number of components of the gearmotor 1, 101 is greatly reduced.

As illustrated in Figure 4, the output block 15 has an end opening 18 coaxial to the longitudinal axis L1. The gearmotor 101 further comprises an internal body 124 which is integral to the casing 3 and has a tubular portion 123 which is coaxial to the longitudinal axis L1. The coaxial portion 123 is inserted inside the cavity 4. The tubular portion 123 is spaced from the planet gears 112, so as to avoid interference or friction during use.

The tubular portion 123 is mounted to rotate around the longitudinal axis L1 and radially inside the planet carrier 108. The tubular portion 123 is coaxial to the planet carrier 108 and is inserted inside the cavity 110 of the planet carrier 108. Preferably, the tubular portion 123 is mounted with clearance inside the planet carrier 108. In particular, the tubular portion 123 is inserted inside the cavity 10 to rotate in a free manner so as not to develop friction or interference with the planet carrier 108 during use.

The particular arrangement of the internal body 124 advantageously allows to make the gearmotor 101 particularly compact and rigid.

The tubular portion 123 has a through internal cavity 116 and having an end opening 117 on the side of the casing 3 and an end opening 120 on the side of the output block 15. On one side, the internal cavity 116 is communicating with the outside of the gearmotor 101 through the end opening 117; on the other side, the internal cavity 116 is in communication with the outside through the end opening 120 and the opening 18.

Advantageously, the cavity 116 is a through cavity. Advantageously, the opening 18 and the end openings 117 and 120 each have a section such as to allow the insertion of external elements such as; electric cables, pneumatic or hydraulic ducts, bearings, sealing members, mechanical components.

Advantageously, the cavity 116 can house, according to the need: a lubricant sealing system so as to seal and protect the gearmotor 1 from external contamination; and/or precision bearings; and/or an encoder; and/or a brake; and/or guarantee the passage of electric or hydraulic or pneumatic systems. Advantageously, the end openings 117 and 120, the opening 18 and the cavity 116 allow the insertion and/or the housing of any combination of said systems as listed above in the gearmotor 101.

Advantageously, the gearmotors 1, 101 of the type described above allow to obtain a transmission ratio $\tau$ given by the following relation:

$$\tau = 1 - \frac{z1 x z2}{z2 x z3}$$

wherein,

z1 = number of teeth of the fixed gear 7, 107;
z2 = number of teeth of the driving gear 13;
z3 = number of teeth of driven gear 14;
z4 = number of teeth of the movable gear 19, 119.

It should be noted that, in the following, module signifies, in a known manner, the ratio between the primitive diameter of a toothed gear and its own number of teeth, namely:

$$m = \frac{Dp}{z}$$

Wherein,

Dp = primitive diameter of a toothed gear;
Z = number of teeth of the same toothed gear.

Advantageously, if the same module is used, for the gears of the first stage meshing torque SI and the second stage meshing torque SII - i.e. if the module of the fixed gear 7, 107 is equal to the module of the drive gear 13 and the module of the movable gear 19, 119 is equal to the module of the driven gear 14 - then the geometry of the system provides that:

$$z1-z2 \; = \; z3-z4$$

In this case, the gearmotor 1, 101 can achieve reduction ratios (and multiplication of torque) ranging between 1:20 and 1:50. If gearings with different modules are achieved, the constraint relative to the above mentioned number of teeth shall not apply. Furthermore, in this case it is possible to obtain ratios with extremely high values. For example, if the toothings z1=101, z2=20, z3=106 and z4=21 are chosen a reduction ratio of 1:2120 is obtained.

Therefore, advantageously, a gearmotor 1,101 of the type described above allows covering the entire range of desirable reduction ratios.

Advantageously, the movable gear 19, 119 is an external gear, and therefore the output block 15 set directly on the external diameter of the planet gears 12, 112 in other words on the maximum diameter of the gearings. In this way the best possible relationship between the size and stiffness of the gearmotor 1, 101, itself is obtained when used for thin and light gears.

In use, the drive system 2, i.e. the brushless motor 2, directly set in rotation the planet carrier 8 around the longitudinal axis L1, thereby rotating the planet gears 12, 112 and the movable gear 19, 119 accordingly.

Advantageously, the fact that the motor 2 is integrated with the planet carrier 8, i.e. the presence of the drive system 2 inside the gearmotor 1, 101, allows some components of the epicyclic gearings of traditional type to be eliminated, in particular the pinion and a series of bearings. In addition, the particular type that achieves the high transmission ratio with a single stage of gears increases the rigidity and precision of the gearmotor 1, 101 itself.

In addition, the presence of the drive system, in particular the brushless motor, which directly drives the planet carriers 8, allows to greatly increases the precision of the gearmotor 1, 101.

The gearmotor 1, 101 of the type described above is an extremely compact and precise reduction gear capable of transmitting torque also in the range of a few hundred Nm. In particular, in the gearmotor 1, 101, the limited number of components makes it possible to improve precision, increase the rigidity (consequently the positioning accuracy) and to reduce the production costs.

The gearmotor 1, 101 thanks to its own structure has minimal clearance, vibration and inertia; this has the advantage of ensuring fast accelerations, gentle movements and high positioning accuracy.

Furthermore, advantageously, in the gearmotor 1 or 101, in use, a lubricant sealing system can be housed or passed through so as to seal and protect the gearmotor 1 or 101; and/or precision bearings; and/or an encoder; and/or a brake; and/or guarantee the passage of electric or hydraulic or pneumatic systems from external contamination.

In this way, it is possible to maintain extremely compact an articulated structure on which a gearmotor 1 or 101 of the type described above is installed.

Moreover, it can be seen that the gearmotor 1 or 101 of the type described above is specialized for articulated structures which have a limited angular movement but are subject to high flexion and torsion loads. Said types of articulated structures have their own large rolling and/or sliding bearings which are external to the gearmotor 1 or 101.

Advantageously, the gearmotor 1 or 101 of the above described type due to its reduced size, compactness and stiffness, as well as due to its large internal cavity, which allows the passage of various types of systems or mechanical components, it is able to adapt to the articulated structure and to actuate the same from the inside. In other words, the gearmotor 1 or 10 can be advantageously inserted inside an articulated structure. In this way, an articulated structure can be supported, with greater guarantees of resistance and reliability, on its bearings, which are external to the gearmotor 1 or 101. Therefore, the gearmotor 1 or 101 does not comprise bearings capable of supporting the articulated structure.

**Claims**

1. A gearmotor (1; 101) comprising: a fixed gear (7; 107), a movable gear (19; 119) and a planet carrier (8); the fixed gear (7; 107), the movable gear (19;

119) and the planet carriers (8) being coaxial relative to a first axis (L1); wherein the gearmotor (1; 101) comprises one or more planet gears (12; 112) connected to said planet carrier (8); each planet gear (12; 112) having a second axis (L2), each planet gear (12; 112) being connected to the planet carrier (8) so as to rotate around said second axis (L2); said first and second axis (L1, L2) being substantially parallel to one another; each planet gear (12; 112) having a driving gear (13) and a driven gear (14), wherein the driving gear (13) meshes with the fixed gear (7; 107) and the driven gear (14) meshes with the movable gear (19; 119); the gearmotor (1; 101) comprising a motor (2) which is directly connected to the planet carrier (8), so as to cause, in use, said planer carrier (8) to rotate around the first axis (L1).

2. The gearmotor (1; 101) according to claim 1, wherein the motor (2) is at least partly built-in in the planet carrier (8).

3. The gearmotor (1; 101) according to claim 1 or 2, wherein the motor (2) is a brushless motor and comprises permanent magnets (20), which are integral to the planet carrier (8).

4. The gearmotor (1; 101) according to one of the previous claims, wherein the planet carrier (8) is axially fixed and can rotate relative to said first axis (L1); the planet carrier (8) being constrained relative to the fixed gear (7; 107) by said planet gears (12; 112); wherein there are at least three planet gears (12; 112).

5. The gearmotor (1; 101) according to one of the previous claims and comprising an output block (15) to transmit, in use, motion to an external member; wherein the output block (15) is integral to the fixed gear (7; 107) which is an external gear.

6. The gearmotor (1; 101) according to one of the previous claims, the movable gear (19; 119) being constrained relative to said planet carrier (8) and said fixed gear (7; 107) by means of said planet gears (12; 112); wherein the movable gear (19; 119) is axially fixed and can rotate relative to said first axis (L1); wherein there are at least three planet gears (12; 112).

7. The gearmotor (1; 101) according to one of the previous claims, wherein the motor (2) is interposed between the driving gear (13) and the driven gear (14) of each planet gear (12; 112).

8. The gearmotor (1; 101) according to any of claims from 1 to 6, wherein the motor (2) is arranged, along said first axis (L1), on the side of each planet gear (12; 112).

9. The gearmotor (1; 101) according to one of the previous claims, wherein the driving gear (13) has the same module as the fixed gear (7; 107) and the driven gear (14) has the same module as the movable gear (19; 119); wherein the equation $z1-z2=z3-z4$ applies, wherein

Z1 is the number of teeth of the fixed gear (7; 107);
Z2 is the number of teeth of the driving gear (13);
Z3 is the number of teeth of the driven gear (14);
Z4 is the number of teeth of the movable gear (19; 119).

10. The gearmotor according to one of the previous claims and having a through internal cavity (16; 116) facing the outside through a first and a second opening (5, 18; 117, 18) of respective opposite ends of the gearmotor (1; 101) itself; said cavities (16; 116) and said openings (5, 18; 117, 18) having a section of dimensions such as to allow the insertion and/or the passing through of external elements, such as, for example, hydraulic/pneumatic/electrical systems and/or bearings.

11. The gearmotor according to one of the previous claims and comprising an output shaft (23) coaxial to said first axis (L1); the output shaft (23) being integral to the movable gear (19) and being mounted in a radially rotatable manner inside the planet carrier (8); the output shaft (23) having a through cavity (16) which faces the outside of the gearmotor (1) at a first and a second opening (5; 18) on opposite ends of the gearmotor (1) itself; said first and second opening (5; 18) and said cavity (16) being configured to allow, in use, the insertion and/or the passing through of external elements, such as hydraulic/pneumatic/electric systems and/or bearings.

12. The gearmotor according to one of the claims from 1 to 10 and comprising an internal body (124) which is integral to the fixed gear (7; 107); said internal body (124) having a tubular portion (123) which is coaxial to the longitudinal axis (L1) and is mounted, with clearance, radially inside the planet carriers (108); the tubular portion (123) having a through cavity (116) which faces the outside of the gearmotor (101) at a first and at a second opening (117; 18) on opposite ends of the gearmotor (101); said first and second opening (117; 18) and said cavity (116) being configured to allow, in use, the insertion and/or the passing through of external elements such as hydraulic/pneumatic/electrical systems and/or bearings.

13. The gearmotor according to claim 12, wherein the fixed gear (107) and the casing (3) are made in a single body.

**14.** The gearmotor according to claim 12 or 13, wherein the movable gear (119) and the exit block (15) are made in a single body.

FIG.1

FIG.3

FIG.2

FIG.4